# FASCICULE DE BREVET EUROPEEN

(11) **EP 2 817 272 B1**
(45) Date de publication et mention de la délivrance du brevet: **13.02.2019**
(21) Numéro de dépôt: 13705192.6
(22) Date de dépôt: 21.02.2013
(51) Int. Cl.: C04B 28/02, C04B 28/14, C04B 28/16, C04B 40/00

(54) **AGENT ANTI-PELLICULE DE SURFACE**
OBERFLÄCHENAKTIVER STOFF GEGEN FILMBILDUNG
ANTI-FILMING SURFACE-ACTIVE AGENT

(30) Priorité: 21.02.2012 FR 1251561
(43) Date de publication de la demande: 31.12.2014
(73) Titulaire: Chryso, 92440 Issy-Les-Moulineaux (FR)
(72) Inventeur: MATEO, Sandrine, F-77760 Ury (FR); BOUSTINGORRY, Pascal, F-91650 Breuillet (FR)
(74) Mandataire: Lavoix
(86) Numéro de dépôt international: PCT/EP2013/053443
(87) Numéro de publication internationale: WO 2013/124350

(56) Documents cités:
- FR-A1- 2 948 930
- DATABASE WPI Week 201156 Thomson Scientific, London, GB; AN 2011-J99313 XP002685433, "Chinese medicinal ointment and manufacturing method thereof", & CN 102 114 166 A (KONG J) 6 juillet 2011 (2011-07-06)

## Description

La présente invention concerne un nouvel adjuvant pour compositions à base de liants hydrauliques, son procédé de préparation ainsi que son procédé d'utilisation.

Il est d'usage de couler des chapes de mortier au sol afin d'aplanir, niveler ou surfacer un support et/ou enrober un plancher chauffant pour ensuite recevoir les couches supérieures (tous types de support : carrelage, sol souple, parquet flottant ou collé etc.).

Après coulage, prise et séchage à la surface de chapes, on observe fréquemment l'apparition d'une pellicule de surface de quelques centièmes de millimètres d'épaisseur formée de particules à base d'hydrate de calcium remontant à la surface. La fine pellicule présente des plissements et des écaillages inesthétiques et réduit considérablement les capacités d'adhérence à la surface des matériaux de finition destinés à recouvrir ultérieurement les chapes, tels que du plâtre, céramiques collées, peintures, enduits divers ou autres revêtements collés.

On observe ce type de pellicule également en surface d'autres compositions hydrauliques comme le béton autoplaçant (BAP), un béton susceptible de se mettre en place dans les coffrages même complexes et encombrés sous le seul effet de la pesanteur.

Pour obtenir une adhérence suffisante il se révèle nécessaire de brosser, gratter ou poncer la surface pour en éliminer la pellicule avant de commencer les travaux de collage d'un revêtement ou de finition. Ces travaux sont longs et onéreux.

Il est connu de US 6,849,118 d'utiliser un adjuvant comprenant un alcool gras et un agent anti-retrait de type oxydes d'alkylène pour empêcher la formation de poussières en surface provoquée par l'agent anti-retrait.

On connaît par ailleurs de WO 95/04008 une composition comprenant des alcools gras en C₁₄ à C₂₂, de préférence sous forme émulsion, notamment pour inhiber l'efflorescence dans les compositions de ciment. L'efflorescence diffère cependant de la pellicule de particules décrite en ce qu'elle résulte d'une réaction de carbonatation de sels de calcium en surface de compositions de ciment.

Du fait de leur faible point de fusion et de leur caractère hydrophobe, les alcools gras sont cependant difficiles à disperser. Sous forme solide, ils s'agglomèrent rapidement sous la chaleur ou encore lors du stockage sous leur propre poids, ce qui rend leur utilisation malaisée.

On connaît également de US 3,486,916 l'utilisation d'une émulsion d'alcool gras pour limiter l'évaporation de l'eau sur les surfaces extérieures.

Enfin, on connaît de FR2948930 l'utilisation d'un adjuvant sous forme de poudre comprenant un alcool gras et un agent anti-mottant pour réduire la formation de pellicules sur des surfaces horizontales. Comme toutes les compositions organiques finement divisées, ce type de composition peut être inflammable et/ou explosive, puisqu'elle comprend des corps gras, notamment alcools gras sous forme de poudres finement divisées. Il faut donc prendre des précautions pour le stockage et la manipulation du produit (par exemple la mise à la terre des installations).

Le but de la présente invention est donc de proposer un adjuvant, avantageusement sous forme liquide, permettant de réduire la formation de pellicules sur des surfaces horizontales de compositions hydrauliques ne présentant pas les inconvénients décrits plus haut.

Un autre objectif de la présente invention est de fournir un tel adjuvant qui soit liquide, facilement utilisable et stable à des températures de 5 à 60°C, ainsi que dans le temps (stable au stockage).

Selon l'invention, ce problème est résolu par un adjuvant comportant au moins un alcool gras et au moins une huile.

Selon un premier aspect, l'invention vise donc un adjuvant anti-pellicule de surface pour liants hydrauliques comprenant au moins un alcool gras et au moins une huile.

On entend par le terme « alcool gras » désigner des composés comportant une fonction polaire et une chaîne carbonée comportant plus de 8 atomes de carbone.

On entend par le terme « huile » désigner un composé exclusivement ou essentiellement hydrocarboné ne comportant pas de fonction de type alcool, présentant un point de fusion inférieur à 40°C, de préférence inférieur à 30°C. Dans le cadre de l'invention le terme « huile » entend également couvrir des huiles minérales, végétales et animales ainsi que leurs dérivés tels que les esters d'acide gras d'huile végétale.

On entend par le terme « liant hydraulique » tout composé ayant la propriété de s'hydrater en présence d'eau et dont l'hydratation permet d'obtenir un solide ayant des caractéristiques mécaniques. Le liant hydraulique peut être un ciment selon la norme EN 197-1 et notamment un ciment Portland, et en particulier un ciment de type CEM I, CEM II, CEM III, CEM IV ou CEM V selon la norme Ciment NF EN 197-1. Le ciment peut donc en particulier comprendre des additions minérales.

L'expression « additions minérales » désigne les laitiers (tels que définis dans la norme Ciment NF EN 197-1 paragraphe 5.2.2), les laitiers d'aciérie, les matériaux pouzzolaniques (tels que définis dans la norme Ciment NF EN 197-1 paragraphe 5.2.3), les cendres volantes (telles que définies dans la norme Ciment NF EN 197-1 paragraphe 5.2.4), les schistes calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs mélanges.
Par le terme « béton », on entend un mélange de liants hydrauliques, de granulats, de sables, d'eau, éventuellement d'additifs, et éventuellement d'additions minérales. Le terme « béton » comprend également les mortiers.
Le terme « liant hydraulique » englobe également les sulfates de calcium anhydres ou hydratés qui permettent de réaliser des chapes à base de sulfate de calcium.
On entend par chape à base de sulfate de calcium, des compositions dans lesquelles le sulfate de calcium présentant des propriétés hydrauliques représente au moins 85% en poids du liant hydraulique total ou pour les cas utilisant des adjuvants, au moins 50% et moins de 85%. Le sulfate de calcium peut être du type semi-hydrate, alpha ou beta, ou du type anhydrite, par exemple du type anhydrite II ou III. Les matériaux pour chapes remplissent généralement les conditions données dans les normes EN 13813 et 13454-1 relatives aux mortiers pour chapes et liants (hydrauliques) et sulfate de calcium pour chapes.

De manière particulièrement préférée, l'adjuvant de l'invention est liquide à température ambiante (c'est-à-dire que le point de fusion de l'adjuvant est inférieur à 40°C, de préférence inférieur à 30°C).

Selon l'invention, l'adjuvant anti-pellicule pour liants hydrauliques comprend au moins un alcool gras et une huile.

L'alcool gras peut être notamment un alcool gras ou un composé dérivé d'alcool gras. Il comporte de préférence 8 à 22 atomes de carbone, de préférence 10 à 18 atomes de carbone et tout particulièrement 16 à 18 atomes de carbone, avantageusement sous forme de chaîne carbonée. La chaîne carbonée peut être linéaire ou ramifiée, saturée ou insaturée. De préférence, l'alcool gras est un alcool gras primaire, dans lequel le groupe alcool se trouve en fin de chaîne.
Particulièrement préférés sont les alcools gras comportant une chaîne carbonée droite saturée, comme le hexadécan1-ol et l'octadécan-1-ol ou un de leurs mélanges.

L'adjuvant selon l'invention peut contenir un seul alcool gras ou plusieurs, par exemple lorsqu'il s'agit d'un alcool gras d'origine naturelle.

L'huile peut notamment être une huile minérale, une huile végétale, un ester d'acide gras d'huile végétale, ou un mélange de ceux-ci.

L'huile minérale peut être une huile minérale aliphatique, paraffinique ou naphténique, ou un mélange de ceux-ci, de préférence une huile paraffinique, et ne comprenant aucune fonction polaire. De préférence, l'huile minérale est un groupe hydrocarboné, linéaire ou ramifié, saturé, comprenant de 8 à 30 atomes de carbone, de préférence 11 à 25 atomes de carbone, ou un mélange. Par exemple, l'huile minérale est un composé de formule CₙH₂ₙ₊₂ avec n compris entre 8 et 30, de préférence entre 11 et 25, ou un mélange de tels composés, par exemple un mélange de composé de formule CₙH₂ₙ₊₂ avec n compris entre 11 et 25.

L'huile végétale peut être choisie parmi l'huile de colza, l'huile de palme, l'huile de coprah, l'huile de ricin, l'huile d'arachide, l'huile de pépin de raisin, l'huile de maïs, l'huile de canola, l'huile de lin, l'huile de noix de coco, l'huile de soja, l'huile de tournesol et leurs mélanges.

L'utilisation d'une huile permet de façon avantageuse d'apporter une certaine fluidité à l'adjuvant et permet d'obtenir une bonne stabilité à froid en permettant d'éviter la cristallisation de l'alcool gras. Sans vouloir être lié par une quelconque théorie il a été montré que l'ajout de 2% d'huile minérale permet de conserver l'adjuvant sous forme liquide à 3°C.

L'adjuvant selon l'invention peut en outre comprendre un composé de formule (I) (glycol) :

RO(AO)ₙH (I)

dans laquelle :
R représente un atome d'hydrogène ou un groupe alkyle, linéaire ou ramifié, comprenant de 1 à 7 atomes de carbone ;
A représente un alkylène, linéaire ou ramifié, comprenant de 1 à 3 atomes de carbone ;
n est un entier de 11 à 70.

De préférence, dans le composé de formule (I), R est un atome d'hydrogène.

De préférence, dans le composé de formule (I), A est un groupe éthylène ou propylène, de préférence propylène.

De préférence, dans le composé de formule (I), n est un entier de 11 à 18.

De préférence, le composé de formule (I) est tel que R est un atome d'hydrogène, A est un propylène et n vaut 15.

Le glycol est avantageusement utilisé, dans le cadre de l'invention, comme solvant de l'alcool gras.

L'adjuvant peut comprendre de préférence de 0 à 99% en poids de glycol, 0,5 à 99,5% en poids d'huile minérale et de 0,5 à 30% en poids d'alcool gras.
Il convient que l'adjuvant selon l'invention soit limpide et homogène, c'est-à-dire que l'adjuvant ne doit pas contenir de composants non dissouts à température ambiante (25°C), de manière à proposer un produit stable au stockage et à la manipulation. Ainsi, et de préférence, l'adjuvant comprend de 0 à 99% en poids de glycol, 0,5 à 99,5% en poids d'huile minérale et de 0,5 à 15% en poids d'alcool gras. De préférence, l'adjuvant comprend de 0 à 76% de glycol, de 0,5 à 99% en poids d'huile minérale et de 1 à 4% en poids d'alcool gras. Les pourcentages étant exprimés en poids par rapport au poids total de l'adjuvant.

Avantageusement, l'adjuvant selon l'invention est constitué des composantes mentionnées ci-dessus. Toutefois, il peut être utile dans certains cas d'ajouter d'autres agents, notamment des agents anti-mousse, plastifiants, notamment superplastifiants, modificateurs de prise, colorants.

La préparation de l'adjuvant selon l'invention est rapide et aisée et peut être réalisée avec des moyens simples. Selon un autre aspect, l'invention vise donc un procédé de préparation d'un adjuvant selon l'invention, comportant les étapes de :
(i) mélange de l'alcool gras et de l'huile ;
(ii) mise sous agitation ;
(iii) chauffage jusqu'à dissolution complète de l'alcool gras.

Le procédé de l'invention peut en outre comprendre une étape préalable de mélange du composé de formule (I) et de l'huile.

L'adjuvant ainsi obtenu se présente sous forme de liquide et peut être ensuite conditionné sans difficultés en flacon. L'adjuvant ainsi conditionné est stable au stockage pendant plusieurs mois même à température élevée ou à faible température.

La présentation sous forme de liquide facilite par ailleurs grandement la mise en oeuvre de l'adjuvant selon l'invention et évite tous les problèmes de sécurité liés à l'utilisation d'adjuvant sous forme de poudre comprenant des alcools gras. En effet, un alcool gras sous forme de poudre, s'il est finement divisé, peut générer une explosion en mélange avec l'air.

En effet, l'adjuvant selon l'invention est un adjuvant de masse et non de surface. Il est donc avantageusement dispersé de manière homogène dans la masse de liant hydraulique, avant, pendant ou après gâchage.

L'adjuvant selon l'invention est ajouté au liant hydraulique sec, ou au sable ou aux granulats avant gâchage, pendant le malaxage ou pendant le gâchage, de préférence l'adjuvant est ajouté à l'eau de gâchage.

De manière générale, le dosage de l'adjuvant selon l'invention est de préférence de 0,1 à 5% en poids par rapport au poids de liant hydraulique.

Le gâchage et coulage des liants hydrauliques est réalisé de manière habituelle. Avantageusement, l'adjuvant n'interfère pas avec la prise du liant hydraulique et n'affecte pas les propriétés du matériau durci.

L'adjuvant selon l'invention ainsi introduit dans la masse avec le liant hydraulique permet d'empêcher l'apparition d'une pellicule formée de particules d'hydroxyde de calcium après coulage, prise et séchage à la surface des liants hydrauliques. L'absence de pellicule permet d'augmenter notablement l'adhérence des matériaux de finition aux surfaces des liants hydrauliques adjuvantés sans nécessité de brossage et améliore par ailleurs la dureté des surfaces.

Selon un dernier aspect, l'invention vise donc un procédé de préparation d'une composition de liant hydraulique adaptée pour la fabrication de chapes ou de béton comportant l'étape consistant à ajouter au liant hydraulique l'adjuvant selon l'invention à un dosage de 0,1 à 5% en poids par rapport au poids de liant hydraulique.

Dans un mode de réalisation, l'adjuvant de la présente invention est particulièrement adapté pour la préparation d'une composition de liant hydraulique pour la fabrication de chapes ciment.

Dans un autre mode de réalisation, l'adjuvant de la présente invention est particulièrement adapté pour la préparation d'une composition de liant hydraulique pour la fabrication de chapes anhydrites, chape pour laquelle le liant hydraulique comprend un sulfate de calcium anhydre. De préférence, dans le cadre de la chape anhydrite le liant hydraulique est un sulfate de calcium anhydre.

Dans un autre mode de réalisation, l'adjuvant de la présente invention est particulièrement adapté pour la préparation d'une composition de liant hydraulique pour la préparation de chapes à base de semi-hydrate, chape pour laquelle le liant hydraulique comprend un sulfate de calcium semi-hydraté, par exemple de type alpha ou béta, de préférence de type alpha. De préférence, dans le cadre de la chape à base semi-hydrate, le liant hydraulique est un sulfate de calcium semi-hydraté, par exemple de type alpha ou béta, de préférence de type alpha.

La présente invention concerne également l'utilisation de l'adjuvant décrit ci-dessus comme adjuvant anti-pellicule de surface pour liants hydrauliques.

L'invention concerne également l'utilisation de l'adjuvant de l'invention comme adjuvant anti-pellicule de surface pour liants hydrauliques, le liant hydraulique étant adapté à la fabrication de chapes ou de béton et le dosage en adjuvant étant de 0,1 à 5 % en poids par rapport au poids de liant hydraulique.

L'invention concerne également un procédé de prévention de la formation d'une pellicule sur la surface des liants hydrauliques dans lequel un adjuvant selon l'invention est mis en oeuvre, notamment est ajouté audit liant hydraulique.

L'invention sera mieux comprise grâce aux exemples ci-après présentés à titre illustratif et non limitatif.

### EXEMPLES

### EXEMPLE 1 : Composition et fabrication d'une chape anhydrite avec un adjuvant huile minérale + composé de formule (I) + alcool gras selon l'invention

Dans un malaxeur de type Rayneri, on prépare un mortier adjuvanté à base de sulfate de calcium anhydre ayant la composition indiquée dans le tableau 1 ci-dessous en suivant le protocole de gâchage suivant :
- Homogénéisation à sec du sable à vitesse lente entre 0-30 secondes ;
- Préhumidification du sable avec 1/3 de l'eau totale entre 30-60 secondes, puis arrêt du malaxeur ;
- A 300 secondes, introduction du sulfate de calcium anhydre et homogénéisation entre 300-330 secondes à vitesse lente
- Ajout du reste de l'eau avec le dispersant et l'adjuvant selon l'invention comprenant un alcool gras (Nafol 16180) (4%), un composé de formule (I) (Pluriol P900®) (86%) et une huile minérale (Hydroseal G250H®) (10%), entre 330 et 390 secondes ;
- Malaxage à vitesse lente entre 390-420 secondes ;
- Arrêt du malaxeur pour racler les bords et le fond du bol à la truelle entre 420- 450 secondes ; et
- Malaxage à vitesse rapide entre 450 et 510 secondes.

L'adjuvant selon l'invention est introduit à raison de 1300g/m³ comme indiqué dans les tableaux 5 et 6.

**Tableau 1 : Composition de mortier à base de sulfate de calcium anhydre**

| Composant | Quantité |
|---|---|
| Sulfate de calcium anhydre | 650 kg/m³ |
| Sable 0/4 mm de Bernières (France) | 1350 kg/m³ |
| Dispersant (CHRYSO®Fluid Premia 196, vendu par CHRYSO, France) | 0,27% en poids total* |
| Eau | 280 kg/m³ |

| | |
|---|---|
| *par rapport à la quantité de sulfate de calcium anhydre | |

L'étalement mesuré au cône (Ø_{supérieur}=7cm, Ø_{inférieur}=10cm, hauteur=6cm) immédiatement après préparation était de 260 ±10 mm. Le mortier ainsi réalisé est coulé dans des moules carrés à bords obliques préalablement huilés de dimensions 40*40 cm de manière à réaliser des dalles de mortier, et la surface du dit mortier est soumise au passage d'une barre de débullage et de mise à niveau pour obtenir une surface lisse.

### EXEMPLE 2 : Composition et fabrication d'une chape anhydrite avec un adjuvant huile minérale + alcool gras selon l'invention

Dans un malaxeur de type Rayneri, on prépare un mortier adjuvanté à base de sulfate de calcium anhydre ayant la composition indiquée dans le tableau 2 ci-dessous en suivant le protocole de gâchage suivant :
- Homogénéisation à sec du sable à vitesse lente entre 0-30 secondes ;
- Préhumidification du sable avec 1/3 de l'eau totale entre 30-60 secondes, puis arrêt du malaxeur ;
- A 300 secondes, introduction du sulfate de calcium anhydre et homogénéisation entre 300-330 secondes à vitesse lente ;
- Ajout du reste de l'eau avec le dispersant et l'adjuvant selon l'invention comprenant un alcool gras (Nafol 1618) (4%), et une huile minérale (HydrosealG250H®) 96%, entre 330 et 390 secondes ;
- Malaxage à vitesse lente entre 390-420 secondes ;
- Arrêt du malaxeur pour racler les bords et le fond du bol à la truelle entre 420- 450 secondes ; et
- Malaxage à vitesse rapide entre 450 et 510 secondes.

L'adjuvant selon l'invention est introduit à raison de 1105g/m³ comme indiqué dans le tableau 6.

**Tableau 2 : Composition de mortier à base de sulfate de calcium anhydre**

| Composant | Quantité |
|---|---|
| Sulfate de calcium anhydre | 650 kg/m³ |
| Sable 0/4 mm de Bernières (France) | 1350 kg/m³ |
| Dispersant (Chryso®Fluid Premia 196, vendu par CHRYSO, France) | 0,27% en poids total* |
| Eau | 280 kg/m³ |

| | |
|---|---|
| *par rapport à la quantité de sulfate de calcium anhydre | |

L'étalement mesuré au cône (Ø_{supérieur}=7cm, Ø_{inférieur}=10cm, hauteur=6cm) immédiatement après préparation était de 260 ±10 mm. Le mortier ainsi réalisé est coulé dans des moules carrés à bords obliques préalablement huilés de dimensions 40*40 cm de manière à réaliser des dalles de mortier, et la surface du dit mortier est soumise au passage d'une barre de débullage et de mise à niveau pour obtenir une surface lisse.

### EXEMPLE 3 : Composition et fabrication d'une chape ciment selon l'invention

Dans un malaxeur de type Rayneri, on prépare un mortier adjuvanté à base de ciment ayant la composition indiquée dans le tableau 3 ci-dessous en suivant le protocole de gâchage suivant :
- Homogénéisation à sec du sable à vitesse lente entre 0-30 secondes ;
- Préhumidification du sable avec 1/3 de l'eau totale entre 30-60 secondes, puis arrêt du malaxeur ;
- A 300 secondes, introduction du ciment et du filler et homogénéisation entre 300-330 secondes à vitesse lente;
- Ajout du reste de l'eau avec le dispersant et l'adjuvant selon l'invention comprenant un alcool gras (Nafol 16180) (4%), un composé de formule (I) (Pluriol P900®) (86%) et une huile minérale (Hydroseal G250H®) (10%),; entre 330 et 390 secondes ;
- Malaxage à vitesse lente entre 390-420 secondes ;
- Arrêt du malaxeur pour racler les bords et le fond du bol à la truelle entre 420 et 450 secondes ; et
- Malaxage à vitesse rapide entre 450 et 510 secondes.

L'étalement mesuré au cône (Ø_{supérieur}=7cm, Ø_{inférieur}=10cm, hauteur=6cm) immédiatement après préparation est de 260 ±10mm. Le mortier ainsi réalisé est coulé dans des moules carrés à bords obliques préalablement huilés de dimensions 40*40 cm de manière à réaliser des dalles de mortier, et la surface du mortier est soumise au passage d'une barre de débullage et de mise à niveau pour obtenir une surface lisse.

**Tableau 3 : Composition de mortier à base de ciment**

| Composant | Quantité |
|---|---|
| ciment de type CEMI | 280 kg/m³ |
| Filler Durcal 10 (vendu par OMYA, France) | 380 kg/m³ |
| Sable Bernières (France) | 1280 kg/m³ |
| Dispersant (CHRYSO®Fluid Optima 100, vendu par CHRYSO, France) | 1,2% en poids total * |
| Eau | 260 kg/m³ |

| | |
|---|---|
| *par rapport à la quantité de liant (ciment+filler) | |

### EXEMPLE 4 : Composition et fabrication d'un béton autoplacant (BAP) selon l'invention

Dans un malaxeur de type Skako Couvrot, on prépare un BAP adjuvanté ayant la composition indiquée dans le tableau 4 ci-dessous en suivant le protocole de gâchage suivant :
- Homogénéisation à sec du sable et des graviers à vitesse lente entre 0-30 secondes ;
- Préhumidification du sable avec 1/3 de l'eau totale de l'ensemble des granulats entre 30-60 secondes, puis arrêt du malaxeur ;
- A 300 secondes, introduction du ciment et du filler et malaxage à sec entre 300-330 secondes ;
- Ajout du reste de l'eau avec le superplastifiant et l'adjuvant selon l'invention comprenant un alcool gras (Nafol 1618®) (4%), un composé de formule (I) (Pluriol P900®) (86%) et une huile minérale (Hydroseal G250H®) (10%), entre 330 et 390 secondes ; et
- Arrêt du malaxeur à 510 secondes.

L'étalement mesuré au cône normalisé (cône d'Abrams) du béton immédiatement après préparation est de 700 ±10 mm. Le béton ainsi réalisé est coulé dans des moules carrés à bords obliques préalablement huilés de dimensions 40*40 cm de manière à réaliser des dalles de béton, et la surface du béton est soumise au passage d'une barre de débullage et de mise à niveau pour obtenir une surface lisse.

**Tableau 4 : Composition de béton auto-plaçant**

| Composant | Quantité |
|---|---|
| ciment de type CEMI | 280 kg/m³ |
| Filler Erbray (vendu par OMYA, France ) | 160 kg/m³ |
| Sable 0/4 de Bernières (France) | 887 kg/m³ |
| Gravier 6/10 de Villermain (France) | 160 kg/m³ |
| Gravier 9/18 de Loire (France) | 653 kg/m³ |
| Dispersant (CHRYSO®Fluid OPTIMA 350, vendu par CHRYSO, France) | 0,7% en poids total* |
| Eau | 213 kg/m³ |

| | |
|---|---|
| *par rapport à la quantité de liant (ciment+filler). | |

### EXEMPLE DE COMPARAISON 5 : Pas d'adjuvant

Afin d'évaluer l'effet de l'adjuvant selon l'invention, on a préparé une chape anhydrite selon l'exemple 1, sans l'adjuvant selon l'invention.

Une partie des chapes obtenues a été évaluée telle quelle, sans traitement (exemple 5A) alors qu'une autre partie a été soumise à un ponçage (exemple 5B).

### EXEMPLE DE COMPARAISON 6 : Alcool gras seul

Afin d'évaluer l'effet de l'adjuvant selon l'invention, on a préparé une dalle de mortier anhydrite selon l'exemple 1 en ajoutant en outre un mélange de 66% en poids d'1-hexadécanol et 33% en poids d'1-octadécanol commercialisé sous le nom de NAFOL 1618 par la société SASOL (avec un D50≈ 40 µm).

L'alcool gras est introduit lors du malaxage au même moment que l'eau de gachâge, à raison de 250g/m³ comme indiqué dans les tableaux 5 et 6.

### EVALUATION DE L'ADHERENCE

Après 7 jours, des carreaux de grès céramiques de dimension 50 x 50 mm sont collés sur la surface des dalles obtenues dans les exemples 1, 2, 5 et 6 ci-dessus au moyen d'un mortier colle à carrelage (colle LANKO Prolidal Plus 5024 commercialisée par la société PAREX LANKO). Ce mortier colle est appliqué selon la norme NF EN 1348 qui consiste à :
- étaler le mortier colle avec un peigne aux dents carrées 5 x 5 x 5 mm ;
- déposer une charge de 2kg pendant 25 à 35 secondes sur chaque carreau en cours de collage, 9 carreaux étant collés par dalle ;
- sécher le mortier colle pendant 21 jours à température ambiante (suivant les conditions de I norme NF EN 1348) ;
- coller des tés d'arrachage sur les carreaux de céramique au moyen d'une colle époxy (LANKO 723, commercialisée par la société PAREX LANKO) ; et
- arracher un jour après les carreaux par l'intermédiaire des tés en mesurant la force nécessaire à l'aide d'un dynamomètre type Dynatest.

Une fracture entre deux matériaux assemblés par collage peut se propager de deux manières : soit à l'intérieur du joint de colle ou du support (chape ou béton) : il s'agit alors d'une rupture cohésive, soit à la surface, et on parle alors de rupture adhésive.

Une rupture cohésive indique que l'interface s'est comportée de manière plus forte que le coeur de la colle ou du support (chape ou béton). Inversement, pour une rupture adhésive, l'interface a été plus faible.

Le mode de rupture (adhésif ou cohésif), ainsi que la force de traction nécessaire pour arracher les carreaux des dalles permettent d'évaluer la capacité d'adhérence des surfaces. Les résultats obtenus sont rassemblés dans le tableau 5 ci-dessous.

**Tableau 5 : Evaluation de l'adhérence**

| **EXEMPLE** | **Adjuvants / Traitement** | **Dosage en g/m³** | **Contrainte de traction [MPa] / Mode de rupture** |
|---|---|---|---|
| 1 | Mélange Alcool gras + Glycol + Huile minérale | 1300 g/m³ | 2.2 MPa / adhésif |
| 5 A | Pas d'adjuvant,non poncée | - | 0.4 MPa / adhésif |
| 5 B | Pas d'adjuvant, Poncée | - | 2.0 MPa / cohésif |
| 6 | Alcool gras non antimotté | 250 g/m³ | Résultats inhomogènes dus à une mauvaise dispersion du produit dans la chape |

### EVALUATION DE LA DURETE DE SURFACE

Afin d'évaluer l'effet de l'adjuvant selon l'invention sur la dureté de surface, les dalles préparées dans les exemples 1, 2, 5 et 6 ont été testées au moyen d'un dispositif appelé Perfotest type CSTB ou test Baronnie.

Le Perfotest permet la réalisation de chocs reproductibles sur des surfaces horizontales. Il est équipé d'un poinçon 5 dièdres destiné à la mesure de la dureté d'un revêtement de classe P2 et P3. Les classes P2 et P3 permettent de classer la résistance d'un revêtement au poinçonnement, résistance qui varie de P1 (faible) à P4 (forte), selon le classement UPeC des matériaux et revêtements de sols. Les classes P2 et P3 sont donc des catégories intermédiaires.

Suivant la hauteur à laquelle le poinçon est lâché, on applique une force différente, P3 étant supérieure à P2. Les résultats sont exprimés en nombre de carrés décollés, dégradés ou intacts. Ainsi, plus le nombre de carrés intacts est grand, et plus la dureté de surface est grande ou moins la pellicule de surface est présente, à la fois pour une classification type P2 et une type P3. Les essais sont réalisés directement en surface des dalles exempte de tout revêtement de surface. Les mesures sont réalisées 4 fois à différents endroits sur chaque dalle à la fois sur essais type P2 et type P3.

Les résultats du test sont consignés dans le tableau 6 ci-dessous.

**Tableau 6 : Evaluation de la dureté de surface**

| **EXEMPLE** | **Adjuvants / Traitement** | **Dosage en g/m³** | **Dureté de surface** |
|---|---|---|---|
| 1 | Mélange Alcool gras + Glycol + Huile minérale | 1300 g/m³ | +++ |
| 2 | Mélange Alcool gras + huile minérale | 1105 g/m³ | +++ |
| 5A | Pas d'adjuvant selon l'invention, non poncée | | -- |
| 5B | Pas d'adjuvant selon l'invention, Poncée | | + |
| 6 | Alcool gras | 250 g/m³ | Résultats inhomogènes dus à une mauvaise dispersion du produit dans la chape |

L'adjuvant selon l'invention permet donc d'améliorer notablement la dureté de surface et la capacité d'adhérence de surfaces de liants hydrauliques à base de ciment ou de sulfate de calcium tout en étant facilement dispersible et stable au stockage.

Les adjuvants de la présente invention présentent par ailleurs avantageusement une bonne stabilité à froid, notamment jusqu'à -3°C.

## Revendications

1. Utilisation d'une composition comprenant au moins un alcool gras, de préférence primaire, et au moins une huile comme adjuvant anti-pellicule de surface pour liants hydrauliques.

2. Utilisation selon la revendication 1, dans laquelle la composition est sous forme liquide à température ambiante.

3. Utilisation selon les revendications 1 ou 2, dans laquelle l'alcool gras comporte 8 à 22 atomes de carbone.

4. Utilisation selon l'une des revendications 3, dans laquelle l'alcool gras est choisi parmi l'hexadécan1-ol et l'octadécan-1-ol ou un de leurs mélanges.

5. Utilisation selon la revendication 4, dans laquelle l'huile est une huile minérale, une huile végétale ou un ester d'acide gras d'huile végétale.

6. Utilisation selon l'une des revendications 1 à 5, dans laquelle l'huile est une huile minérale de type aliphatique, paraffinique ou naphténique, de préférence l'huile minérale est un composé de formule CₙH₂ₙ₊₂, avec n un entier de 8 à 30.

7. Utilisation selon l'une des revendications 1 à 6, dans laquelle la composition comprend en outre un composé de formule (I),
RO(AO)ₙH (I)
dans laquelle :
R représente un atome d'hydrogène ou un groupe alkyle, linéaire ou ramifié, comprenant de 1 à 7 atomes de carbone ;
A représente un alkylène, linéaire ou ramifié, comprenant de 1 à 3 atomes de carbone ;
n est un entier de 11 à 70.

8. Utilisation selon l'une des revendications 1 à 7, dans laquelle la composition comprend de 0 à 99% en poids de composé de formule (I), de 0,5 à 99,5% en poids d'huile minérale et de 0,5 à 30%, de préférence de 0,5 à 15%, en poids d'alcool gras, par rapport au poids total de l'échantillon.

9. Utilisation selon l'une des revendications 1 à 8, dans laquelle la composition comprend de 0 à 76% en poids de composé de formule (I), de 0,5 à 99% en poids d'huile minérale et de 1 à 4% en poids d'alcool gras, par rapport au poids total de l'échantillon.

10. Utilisation selon l'une des revendications 1 à 9, dans laquelle le liant hydraulique est adapté à la fabrication de chapes ou de béton et dans laquelle on utilise un dosage de l'adjuvant de 0,1 à 5% en poids par rapport au poids de liant hydraulique.

11. Utilisation selon la revendication 10, pour laquelle la chape est une chape anhydrite, une chape ciment ou une chape à base de semi-hydrate.

12. Adjuvant anti-pellicule de surface pour liants hydrauliques comprenant au moins un alcool gras primaire, au moins une huile et un composé de formule (I)
RO(AO)ₙH (I)
dans laquelle :
R représente un atome d'hydrogène ou un groupe alkyle, linéaire ou ramifié, comprenant de 1 à 7 atomes de carbone ;
A représente un alkylène, linéaire ou ramifié, comprenant de 1 à 3 atomes de carbone ;
n est un entier de 11 à 70.

13. Adjuvant selon la revendication 12, dans lequel l'alcool gras comporte 8 à 22 atomes de carbone.

14. Adjuvant selon les revendications 12 ou 13, dans lequel l'huile est une huile minérale, une huile végétale ou un ester d'acide gras d'huile végétale.

15. Adjuvant selon l'une des revendications 12 à 14, dans lequel l'huile minérale est une huile minérale de type aliphatique, paraffinique ou naphténique, de préférence un composé de formule CₙH₂ₙ₊₂ avec n un entier de 8 à 30.

16. Adjuvant selon l'une des revendications 12 à 15, dans lequel l'adjuvant est sous forme liquide à température ambiante.

## Patentansprüche

1. Verwendung einer Zusammensetzung, die mindestens einen bevorzugt primären Fettalkohol und mindestens ein Öl umfasst, als oberflächenaktiver Hilfsstoff gegen Filmbildung für hydraulische Bindemittel.

2. Verwendung nach Anspruch 1, wobei die Zusammensetzung bei Raumtemperatur flüssig ist.

3. Verwendung nach Anspruch 1 oder 2, wobei der Fettalkohol 8 bis 22 Kohlenstoffatome aufweist.

4. Verwendung nach einem der Ansprüche 3, wobei der Fettalkohol wahlweise Hexadecan-1-ol oder Octadecan-1-ol oder eine Mischung derselben ist.

5. Verwendung nach Anspruch 4, wobei das Öl ein Mineralöl, ein Pflanzenöl oder ein Pflanzenöl-Fettsäureester ist.

6. Verwendung nach einem der Ansprüche 1 bis 5, wobei das Öl ein aliphatisches, paraffinisches oder naphthenisches Mineralöl ist, wobei das Mineralöl bevorzugt eine Verbindung der Formel CₙH₂ₙ₊₂ ist, wobei n eine ganze Zahl von 8 bis 30 ist.

7. Verwendung nach einem der Ansprüche 1 bis 6, wobei die Zusammensetzung des Weiteren eine Verbindung der Formel (I) umfasst,
RO(AO)ₙH (I)
wobei:
R für ein Wasserstoffatom oder eine lineare oder verzweigte Alkylgruppe mit 1 bis 7 Kohlenstoffatomen steht;
A für ein lineares oder verzweigtes Alkylen mit 1 bis 3 Kohlenstoffatomen steht; und
n eine ganze Zahl von 11 bis 70 ist.

8. Verwendung nach einem der Ansprüche 1 bis 7, wobei die Zusammensetzung bezogen auf das Gesamtgewicht der Probe 0 bis 99 Gew.-% der Verbindung der Formel (I), 0,5 bis 99,5 Gew.-% Mineralöl und 0,5 bis 30 Gew.-%, bevorzugt 0,5 bis 15 Gew.-%, Fettalkohol umfasst.

9. Verwendung nach einem der Ansprüche 1 bis 8, wobei die Zusammensetzung bezogen auf das Gesamtgewicht der Probe 0 bis 76 Gew.-% der Verbindung der Formel (I), 0,5 bis 99 Gew.-% Mineralöl und 1 bis 4 Gew.-% Fettalkohol umfasst.

10. Verwendung nach einem der Ansprüche 1 bis 9, wobei das hydraulische Bindemittel zur Herstellung von Estrichen oder Beton geeignet ist und wobei der Hilfsstoff bezogen auf das Gesamtgewicht des hydraulischen Bindemittels in einer Dosierung von 0,1 bis 5 Gew.-% verwendet wird.

11. Verwendung nach Anspruch 10, wobei der Estrich ein Anhydritestrich, ein Zementestrich oder ein Halbhydratestrich ist.

12. Oberflächenaktiver Hilfsstoff gegen Filmbildung für hydraulische Bindemittel, umfassend mindestens einen primären Fettalkohol, mindestens ein Öl und eine Zusammensetzung der Formel (I),
RO(AO)ₙH (I)
wobei:
R für ein Wasserstoffatom oder eine lineare oder verzweigte Alkylgruppe mit 1 bis 7 Kohlenstoffatomen steht;
A für ein lineares oder verzweigtes Alkylen mit 1 bis 3 Kohlenstoffatomen steht; und
n eine ganze Zahl von 11 bis 70 ist.

13. Hilfsstoff nach Anspruch 12, wobei der Fettalkohol 8 bis 22 Kohlenstoffatome aufweist.

14. Hilfsstoff nach Anspruch 12 oder 13, wobei das Öl ein Mineralöl, ein Pflanzenöl oder ein Pflanzenöl-Fettsäureester ist.

15. Hilfsstoff nach einem der Ansprüche 12 bis 14, wobei das Mineralöl ein aliphatisches, paraffinisches oder naphthenisches Mineralöl, bevorzugt eine Verbindung der Formel CₙH₂ₙ₊₂ ist, wobei n eine ganze Zahl von 8 bis 30 ist.

16. Hilfsstoff nach einem der Ansprüche 12 bis 15, wobei der Hilfsstoff bei Raumtemperatur flüssig ist.

## Claims

1. Use of a composition comprising at least one fatty alcohol, preferably primary fatty alcohol, and at least one oil as an anti-filming surface admixture for hydraulic binders.

2. Use according to claim 1, wherein the composition is in liquid form at room temperature.

3. Use according to one of claims 1 or 2, wherein the fatty alcohol comprises 8 to 22 carbon atoms.

4. Use according to claim 3, wherein the fatty alcohol is chosen from hexadecan-1-ol and octadecan-1-ol or a mixture thereof.

5. Use according to claim 4, wherein the oil is a mineral oil, vegetable oil or a fatty acid ester of a vegetable oil.

6. Use according to one of claims 1 to 5, wherein the oil is an aliphatic, paraffinic or naphthenic mineral oil, preferably the mineral oil is a compound of formula CₙH₂ₙ₊₂ with n being an integer between 8 and 30.

7. Use according to one of claims 1 to 6, wherein the composition also comprises a compound of formula (I),
RO(AO)ₙH (I)
wherein:
R is a hydrogen atom or an alkyl group, linear or branched, comprising 1 to 7 carbon atoms;
A is an alkylene, linear or branched, comprising 1 to 3 carbon atoms;
n is an integer between 11 and 70.

8. Use according to one of claims 1 to 7, wherein the composition comprises 0 to 99% by weight of a compound of formula (I), 0.5 to 99.5% by weight of a mineral oil and 0.5 to 30%, preferably 0.5 to 15% by weight of a fatty alcohol, with respect to the total weight of the sample.

9. Use according to one of claims 1 to 8, wherein the composition comprises 0 to 76% by weight of a compound of formula (I), 0.5 to 99% by weight of a mineral oil and 1 to 4% by weight of a fatty alcohol, with respect to the total weight of the sample.

10. Use according to one of claims 1 to 9, wherein the hydraulic binder is suitable for the production of screeds or concrete and wherein an admixture proportion of 0.1 to 5% by weight with respect to the weight of hydraulic binder is used.

11. Use according to claim 10, wherein the screed is an anhydrite screed, a cement screed or a hemihydrate-based screed.

12. Anti-filming surface admixture for hydraulic binders comprising at least one primary fatty alcohol, at least one oil and a compound of formula (I)
RO(AO)ₙH (I)
wherein:
R is a hydrogen atom or an alkyl group, linear or branched, comprising 1 to 7 carbon atoms;
A is an alkylene, linear or branched, comprising 1 to 3 carbon atoms;
n is an integer between 11 and 70.

13. Admixture according to claim 12, wherein the fatty alcohol comprises 8 to 22 carbon atoms.

14. Admixture according to one of claims 12 or 13, wherein the oil is a mineral oil, a vegetable oil or a fatty acid ester of a vegetable oil.

15. Admixture according to one of claims 12 to 14, wherein the mineral oil is an aliphatic, paraffinic or naphthenic mineral oil, preferably a compound of formula CₙH₂ₙ₊₂ with n being between an integer between 8 and 30.

16. Admixture according to one of claims 12 to 15, wherein the admixture is in liquid form at room temperature.
